# EUROPEAN PATENT APPLICATION

(11) **EP 1 146 757 A1**
(43) Date of publication of application: **17.10.2001**
(21) Application number: 00107717.1
(22) Date of filing: 11.04.2000
(51) Int. Cl.: H04Q 7/32

(54) **Method for personalizing a mobile handset**

(71) Applicant: SIEMENS AKTIENGESELLSCHAFT, 80333 München (DE)
(72) Inventor: Rosset, Gael, 9000 Aalborg (DK)

(57) **Abstract**

In a method for personalizing a mobile handset a subscriber identity module (SIM) card identifier of a first SIM card is stored as a home SIM card identifier and a country identifier of a first network is stored as a home network country identifier. Upon a registration of the mobile handset on a current network, a SIM card identifier of a current SIM card in the mobile handset is compared to the stored home SIM card identifier and a country identifier of the current network is compared to the stored home network country identifier. A communications block on the handset is activated when the comparison indicates that both the SIM card identifier of the current SIM card in the mobile handset is different from the stored home SIM card identifier and the country identifier of the first network is different from the stored home network country identifier. A control key is useable for unblocking the handset.

## Description

### Related Technology

The present invention relates generally to a handset for a mobile communication systems in general, and, more specifically, to a method for personalizing a mobile handset.

A mobile handset may offer one or more anti-theft, or anti-fraud functions known as locks or personalization functions. Such personalization functions include network personalization, network subset personalization, service provider personalization and subscriber identity module (SIM) personalization. See Global System for Mobile Telecommunications (GSM) 02.22 version 5.4.0 page 7, July 1998, European Telecommunications Standards Institute (ETSI), F-06921 Sophia Antipolis CEDEX FRANCE. When one of these locks is enabled on a handset, the user loses some operating flexibility. For example, setting SIM personalization causes the handset to be locked to one SIM card. Should the user desire to then use another SIM card, he must first depersonalize the handset. This depersonalization operation may be cumbersome in that a code of up to 16 digits must be inputted.

Often, mobile handsets stolen in one country are later sold on the black market in another country. It may be reasonable to assume that a handset has been stolen when the handset is used in a foreign country with a SIM card that has not previously been used with that handset.

It is an object of the present invention to provide a personalization system for a mobile handset which permits a relatively large degree of operating flexibility for the user in his home country and in a foreign country with the user's own SIM card, and if necessary with a new SIM card, but which blocks the use of the handset when it appears to be stolen.

### Advantages of the Invention

The present invention provides a method for personalizing a mobile handset. According to the method, a SIM card identifier of a first SIM card is stored as a home SIM card identifier and a country identifier of a first network is stored as a home network country identifier. Upon a registration of the mobile handset on a current network, a SIM card identifier of a current SIM card in the mobile handset is compared to the stored home SIM card identifier and a country identifier of the current network is compared to the stored home network country identifier. A communications block on the handset is activated when the comparing indicates that both the SIM card identifier of the current SIM card in the mobile handset is different from the stored home SIM card identifier and the country identifier of the first network is different from the stored home network country identifier.

The present invention also provides a mobile handset for performing the method according to the present invention. The mobile handset includes a first memory is provided for storing the home SIM card identifier, a second memory is provided for storing the home network country identifier, and a processor is provided for performing the comparing.

The present invention also provides an article comprising a storage medium, the storage medium having a set of instructions, the set of instructions being capable of being executed by at least one processor to implement the method for personalizing a mobile handset according to the present invention.

The present invention provides a minimally restrictive method of theft protection which uses both SIM card information and network information provided by a servicing network itself in the form of the mobile country code (MCC).

The personalization method of the present invention provides a lock which is automatically activated when a mobile handset is used in a country different from the home country with a SIM card different from the home SIM card. This situation does not occur as often as simple SIM card change by the handset owner. In a case where the mobile handset has not been stolen, but the owner desires to use the handset in another country with a new SIM card, the present invention permits the owner to deactivate the lock with a control key.

### Drawings

Further advantages of the present invention will become apparent from the claims and the description below, based on the drawings, in which:
Fig. 1 is a schematic diagram showing a mobile handset according to the present invention; and
Fig. 2 is a flowchart illustrating a method according to the present invention.

### Description

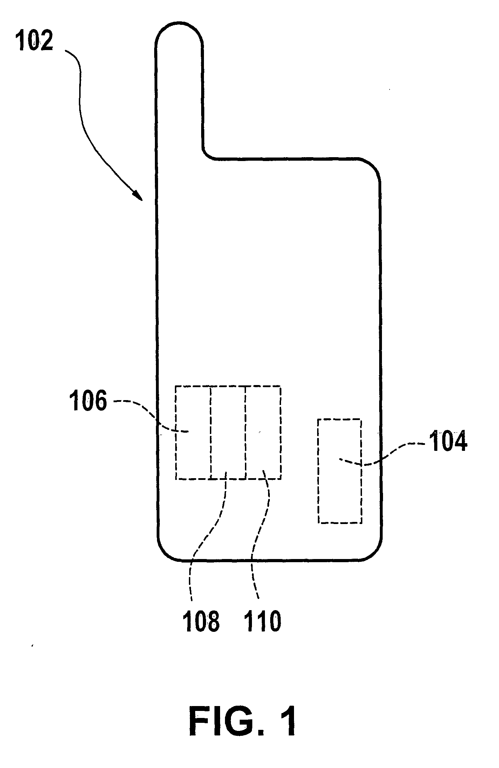

Referring to Fig. 1, a mobile handset 102 includes a processor 104 and memory locations 106, 108 and 110. Mobile handset 102 may be any of a variety of mobile terminals capable of operating in any of a variety of systems, such as, for example, in a GSM system. Processor 104 may be any of various known processors for carrying out operations in mobile handset and for storing and retrieving data from memory locations 106, 108 and 110. Processor 104 may be any suitable processor or microprocessor. Memory locations 106, 108, 110 may be any of a variety of memory registers and/or media types, such as electrically erasable programable read-only memory (EEPROM), dynamic random access memory (DRAM), etc., capable of storing data. Memory location 106, 108 and 110 may be separate data storage locations or may be separate partitions of one larger memory register.

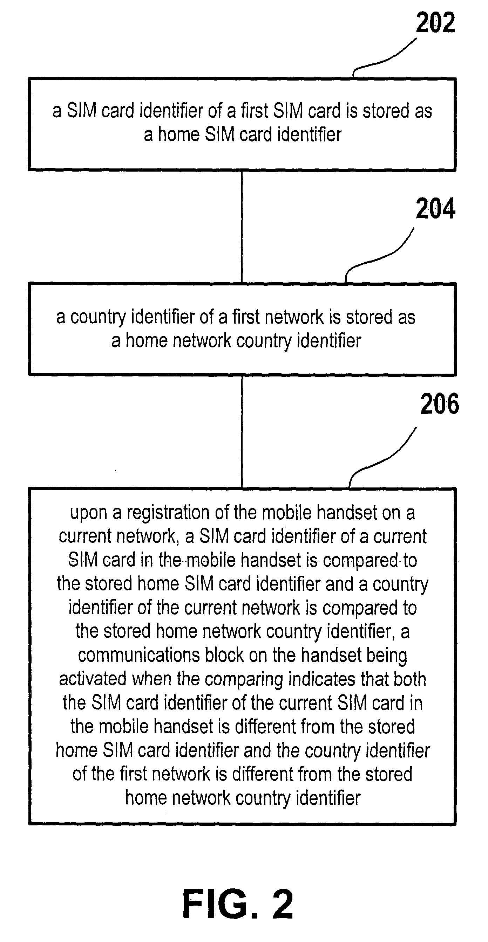

Fig. 2 shows a flowchart depicting a method according to the present invention. According to the present invention, a SIM card identifier of a first SIM card is stored as a home SIM card identifier (see block 202) in, for example, memory location 106. Also, a country identifier of a first network is stored as a home network country identifier, in for example, memory location 108 (see block 204). These actions may take place when the mobile handset is first turned on after purchase. The SIM card identifier of the first SIM card is preferably the International Mobile Subscriber Identity (IMSI). See GSM 11.11 version 5.3.0 page 52, July 1996 ETSI. However, other SIM card identifiers are possible. The country identifier of the first network is preferably the mobile country code (MCC) which is typically sent by a network to a mobile handset when the known handset registration process on the network takes place.

Referring further to Fig. 2, upon subsequent registration of the mobile handset on a network, a SIM card identifier of a SIM card currently in the mobile handset is compared to the stored home SIM card identifier and a country identifier of the current network is compared to the stored home network country identifier (see block 206). This comparison is preferably performed by processor 104. When the comparing indicates that both the SIM card identifier of the current SIM card in the mobile handset is different from the stored home SIM card identifier and the country identifier of the current network is different from the stored home network country identifier, processor 104 initiates the activation of a communications block on the handset (see block 206). The communications block, or lock, prevents the use of the handset from performing any operation on the mobile handset. The communications block may be applied after the user has entered his personal identification number (PIN) and the PIN has been verified in the customary fashion. An appropriate message may then be displayed on the handset, indicating that the handset has been blocked.

Thus, a stolen mobile handset cannot be used with a new SIM card in, for example, a foreign country because the SIM card identifier of the new SIM card won't match the stored home SIM card identifier and the country identifier of the foreign network won't match the stored home network country identifier.

If a blocked handset has, in fact not been stolen, but the bonafide owner is simply trying to use the handset in a foreign network with a new SIM card, the owner may use a control key, or code, to unlock the handset so that communications are no longer blocked. The control key preferably works in conjunction with processor 104 to unlock the mobile handset. Unlocking the mobile handset using the control key acts like a reset to save the SIM card identifier of the new SIM card as the home SIM card identifier and to save the foreign network identifier as the home network identifier.

The control key may be stored in memory location 110 (see Fig. 1) by the handset manufacturer. Preferably memory location 110 is a secure location in the handset which cannot easily be read or overwritten, such as an EEPROM. Additionally, the owner of the handset is preferably provided the control key on, for example, a document at the time of purchase of the handset. Other techniques for providing the owner with the control key may be envisioned within the scope of the present invention. The control key stored in memory location 110 is compared with the control key entered by the handset owner. If they are equal, the handset is unlocked by setting a lock parameter to disable in memory 110.

Each time the mobile handset is registered on a network, the SIM card identifier of the SIM card currently in the mobile handset is compared to the stored home SIM card identifier and the country identifier of the current network is compared to the stored home network country identifier. If the country identifiers are the same, but the SIM card identifiers are different, then the stored home SIM card identifier is updated, or replaced, with the SIM card currently in the mobile handset. When the comparison indicates that both the SIM card identifier of the current SIM card in the mobile handset is different from the stored home SIM card identifier and the country identifier of the current network is different from the stored home network country identifier, a communications block is placed on the handset, as described above.

Preferably, a software program running on processor 104 effects the comparison, locking and unlocking functions according to the present invention. Such programming steps may, of course, be executed by another appropriate processor or processors. As such programming steps would be well-understood by a person of skill in the art, they are not further described herein. It should be noted that embodiments are also possible in which hardware elements replace the software.

Various embodiments within the scope of the present invention are possible. For example, various schemes may be envisioned for providing the mobile handset owner with the control key, including electronic distribution via the INTERNET, for example, etc. These and other variations are intended to be part of the present invention, the scope of which is intended to be limited only by the claims appended hereto.

## Claims

1. A method for personalizing a mobile handset, **characterized in that**
a SIM card identifier of a first SIM card is stored as a home SIM card identifier;
a country identifier of a first network is stored as a home network country identifier; and
upon a registration of the mobile handset on a current network, a SIM card identifier of a current SIM card in the mobile handset is compared to the stored home SIM card identifier and a country identifier of the current network is compared to the stored home network country identifier, a communications block on the handset being activated when the comparing indicates that both the SIM card identifier of the current SIM card in the mobile handset is different from the stored home SIM card identifier and the country identifier of the first network is different from the stored home network country identifier.

2. The method according to claim 1, **characterized in that**
when the comparing indicates both that the SIM card identifier of the current SIM card in the mobile handset is different from the stored home SIM card identifier and the country identifier of the current network is the same as the stored home network country identifier, then the current SIM card identifier is stored as the home SIM card identifier in place of the SIM card identifier of the first SIM card identifier.

3. The method according to one of claims 1-2, **characterized in that** a control key is useable to store the country identifier of the current network as the home network country identifier and to store the current SIM card identifier as the home SIM card identifier so as to deactivate the communications block

4. The method according to claims 3, **characterized in that** control key is stored in the mobile handset.

5. The method according to one of claims 3-4, **characterized in that** the control key is provided to a user of the mobile handset separate from the mobile handset.

6. The method according to one of claims 1-5, **characterized in that** the SIM card identifier of the first SIM card and the SIM card identifier of the current SIM card in the mobile handset include the respective IMSI of the first SIM card and the current SIM card.

7. The method according to one of claims 1-6, **characterized in that** the country identifier of the first network and the country identifier of the current network include the respective network MCC.

8. A mobile handset for performing the method according to one of claims 1-7, **characterized in that**
a first memory is provided for storing the home SIM card identifier;
a second memory is provided for storing the home network country identifier; and
a processor is provided for performing the comparing.

9. A mobile handset for performing the method according to one of claims 3-5, **characterized in that** a third memory is provided for storing the control key.

10. An article comprising a storage medium, the storage medium having a set of instructions, the set of instructions being capable of being executed by at least one processor to implement a method for personalizing a mobile handset, **characterized in that**
a SIM card identifier of a first SIM card is stored as a home SIM card identifier;
a country identifier of a first network is stored as a home network country identifier; and
upon a registration of the mobile handset on a current network, a SIM card identifier of a current SIM card in the mobile handset is compared to the stored home SIM card identifier and a country identifier of the current network is compared to the stored home network country identifier, a communications block on the handset being activated when the comparing indicates that both the SIM card identifier of the current SIM card in the mobile handset is different from the stored home SIM card identifier and the country identifier of the first network is different from the stored home network country identifier.
